# EUROPÄISCHE PATENTSCHRIFT

(11) **EP 0 776 413 B1**
(45) Veröffentlichungstag und Bekanntmachung des Hinweises auf die Patenterteilung: **31.10.2001**
(21) Anmeldenummer: 96903905.6
(22) Anmeldetag: 28.02.1996
(51) Int. Cl.: F02M 25/08, F16K 31/06

(54) **VENTIL ZUM DOSIERTEN EINLEITEN VON VERFLÜCHTIGTEM BRENNSTOFF**
VALVE FOR THE METERED INTRODUCTION OF VAPORISED FUEL
SOUPAPE POUR L'ADMISSION DOSEE DE CARBURANT VAPORISE

(30) Priorität: 05.05.1995 DE 19516545
(43) Veröffentlichungstag der Anmeldung: 04.06.1997
(73) Patentinhaber: ROBERT BOSCH GMBH, 70442 Stuttgart (DE)
(72) Erfinder: KRIMMER, Erwin, D-73655 Plüderhausen (DE); SCHULZ, Wolfgang, D-74321 Bietigheim-Bissingen (DE); MIEHLE, Tilman, D-71394 Kernen (DE); ZIMMERMANN, Manfred, D-74906 Bad Rappenau (DE)
(86) Internationale Anmeldenummer: DE9600326
(87) Internationale Veröffentlichungsnummer: WO9635052

(56) Entgegenhaltungen:
- DE-A- 4 023 044
- DE-B- 1 001 073
- US-A- 1 920 925
- US-A- 5 150 879
- PATENT ABSTRACTS OF JAPAN vol. 4, no. 186 (C-036), 20.Dezember 1980 & JP,A,55 127123 (HITACHI), 1.Oktober 1980,

## Beschreibung

### Stand der Technik

Die Erfindung geht aus von einem Ventil zum dosierten Einleiten von aus einem Brennstofftank einer Brennkraftmaschine verflüchtigtem Brennstoff in ein Ansaugrohr der Brennkraftmaschine nach der Gattung des Anspruchs 1. Es ist schon ein derartiges Ventil bekannt (DE-OS 40 23 044), dem Brennstoff über einen Zuströmstutzen zugeführt wird, um diesen danach in dosierter Weise über einen am Ventil vorgesehenen Abströmstutzen in das Ansaugrohr abzugeben. Der Zuströmstutzen des Ventils ist zum Beispiel über eine Schlauchleitung mit einem Adsorptionsfilter verbunden, der die aus dem Brennstofftank verflüchtigten Brennstoffdämpfe zwischenspeichert und über die Schlauchleitung dem Ventil zuführt. Dabei besteht die Gefahr, daß Schmutzstoffe im Brennstoff, zum Beispiel vom Adsorptionsfilter, in das Innere des Ventils gelangen können, welche eine einwandfreie Funktion des Ventils und damit die Betriebssicherheit beeinträchtigen können. Um dies zu vermeiden, werden Schmutzfilter beispielsweise in der Schlauchleitung zwischen dem Adsorptionsfilter und dem Ventil oder im Zuströmstutzen des Ventils eingebaut. Die Schlauchleitung beziehungsweise der Zuströmstutzen des Ventils hat jedoch nur einen kleinen Strömungsquerschnitt, so daß der Schmutzfilter ebenfalls nur einen kleinen Strömungsquerschnitt aufweisen kann. Derartige Schmutzfilter können jedoch relativ schnell von den Schmutzstoffen des Brennstoffs zugesetzt werden, wodurch sich ein vergrößerter Strömungswiderstand am Schmutzfilter ergibt, der einen Druckverlust und damit eine Reduzierung der Durchflußmenge des Ventils zur Folge hat. Bekannt ist durch die US-A-5 150 879 ebenfalls ein Elektromagnetventil, bei dem zwischen dem Elektromagneten und einem Zuströmstutzen ein Schmutzfilter angeordnet ist.

### Vorteile der Erfindung

Das erfindungsgemäße Ventil mit den kennzeichnenden Merkmalen des Anspruchs 1 hat demgegenüber den Vorteil, daß das Ventil während der vorgesehenen Lebensdauer eine einwandfreie Funktion und hohe Betriebssicherheit aufweist. Vorteilhafterweise ist dies mit einem Schmutzfilter möglich, der während der vorgesehenen Lebensdauer nur einen äußerst geringen Druckverlust bewirkt, so daß eine Reduzierung der Durchflußmenge des Ventils vermieden werden kann. Besonders vorteilhaft ist, daß der hierzu vorgesehene Schmutzfilter in einfacher Art und Weise in das Ventil einbaubar ist, so daß sich die Herstellungskosten des Ventils durch den Schmutzfilter nur wenig erhöhen. Vorteilhaft ist auch, daß der Schmutzfilter einen Einstellvorgang der Durchflußmenge des Ventils nicht behindert, so daß dieser in bereits bekannte Ventile, ohne große konstruktive Änderungen vornehmen zu müssen, eingebaut werden kann.

Durch die in den Unteransprüchen aufgeführten Maßnahmen sind vorteilhafte Weiterbildungen und Verbesserungen des im Anspruch 1 angegebenen Ventils möglich.

### Zeichnung

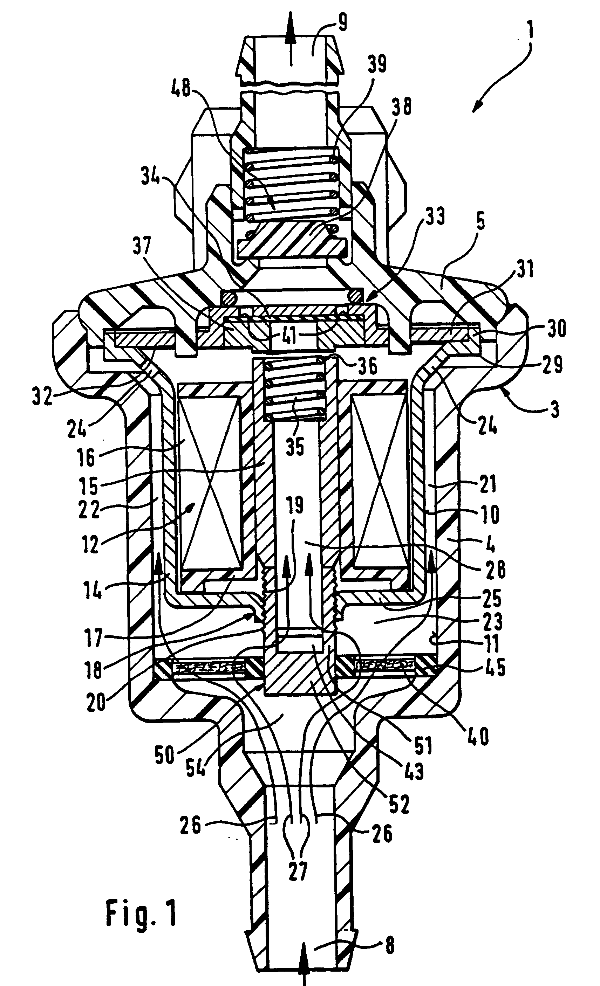

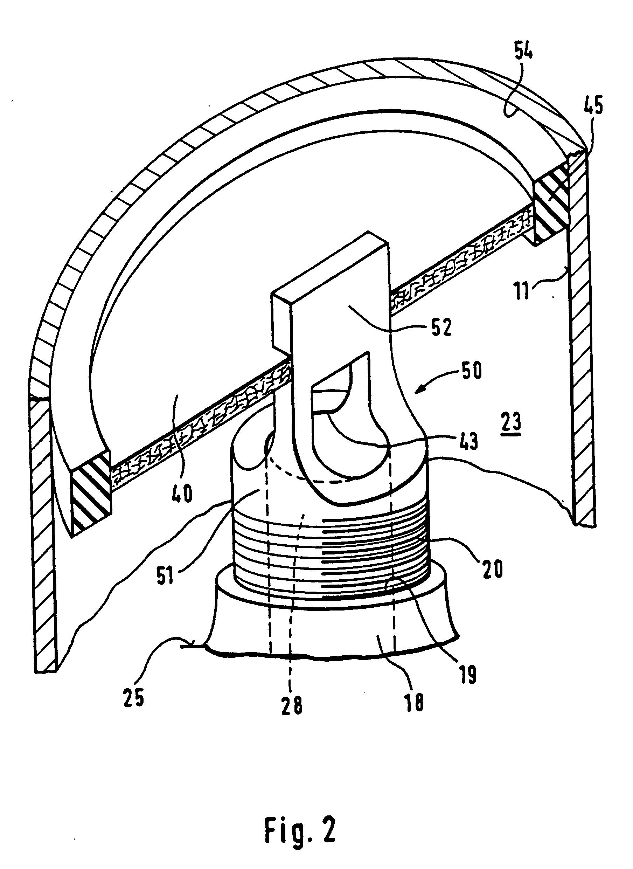

Ein Ausführungsbeispiel ist in der Zeichnung vereinfacht dargestellt und in der nachfolgenden Beschreibung näher erläutert. Es zeigen Figur 1 einen Längsschnitt eines erfindungsgemäß ausgebildeten Ventils, Figur 2 einen perspektivischen Teilausschnitt des Ventils.

### Beschreibung des Ausführungsbeispiels

Das in Figur 1 im Längsschnitt schematisch dargestellte Ventil 1 dient zum dosierten Einleiten von aus einem Brennstofftank einer Brennkraftmaschine verflüchtigtem Brennstoff in ein Ansaugrohr der Brennkraftmaschine und ist Teil eines nicht näher dargestellten Brennstoffverdunstungs-Rückhaltesystems einer Brennkraftmaschine. Der Aufbau und die Funktion derartiger Brennstoffverdunstungs-Rückhaltesysteme ist beispielsweise der Bosch Technischen Unterrichtung, Motor Management Motronic, zweite Ausgabe, August 1993, auf Seiten 48 und 49 entnehmbar. Der Aufbau und die Wirkungsweise eines derartigen, auch als Regenerierventil oder Tankentlüftungsventil bezeichneten Ventils 1 ist dem Fachmann weiter aus der DE-OS 40 23 044 bekannt, deren Offenbarung Bestandteil der hier vorliegenden Patentanmeldung sein soll.

Das Ventil 1 weist ein zweiteiliges Ventilgehäuse 3 mit einem topfförmigen Gehäuseteil 4 und einem kappenförmigen Gehäuseteil 5 auf. Der kappenförmige Gehäuseteil 5 ist auf den topfförmigen Gehäuseteil 4 aufsetzbar und schließt diesen ab. Der topfförmige Gehäuseteil 4 trägt einen Zuströmstutzen 8 zum Anschließen an einen Entlüftungsstutzen des Brennstofftanks oder an einen diesem nachgeschalteten Adsorptionsfilter. Der Adsorptionsfilter ist mit einem Speichermedium für Brennstoff, zum Beispiel mit Aktivkohle, gefüllt und dient zur Zwischenspeicherung von aus dem Brennstofftank verflüchtigtem Brennstoffdampf. Der kappenförmige Gehäuseteil 5 besitzt einen Abströmstutzen 9 zum Anschließen an das Ansaugrohr der Brennkraftmaschine. Der Zuströmstutzen 8 und der Abströmstutzen 9 sind jeweils axial in den Gehäuseteilen 4 beziehungsweise 5 angeordnet. Im Innern des topfförmigen Gehäuseteils 4 ist ein Elektromagnet 12 angeordnet. Er weist ein topfförmiges Magnetgehäuse 14 mit einem einen Boden 25 des Magnetgehäuses 14 durchdringenden, koaxialen, hohlzylindrischen Magnetkern 15 und eine zylindrische Erregerspule 16 auf, die auf einem Spulenträger 17 sitzt und im Magnetgehäuse 14 den Magnetkern 15 umschließend einliegt. An dem Boden 25 des Magnetgehäuses 14 ist einstückig ein nach außen vorspringender Gewindestutzen 18 mit einem Innengewinde 19 ausgebildet, in welchem ein Außengewindeabschnitt 20 auf dem hohlzylindrischen Magnetkern 15 verschraubt ist.

Durch Drehen des Magnetkerns 15 kann dieser im Magnetgehäuse 14 axial verschoben werden. Der Magnetkern 15 fluchtet mit dem Zuströmstutzen 8, so daß Brennstoffdampf in einer vom hohlen Magnetkern 15 begrenzten, axialen Durchgangsöffnung 28 strömen kann. Das Magnetgehäuse 14 mit Magnetkern 15 ist dabei so in dem topfförmigen Gehäuseteil 4 eingesetzt, daß zwischen dem Außenmantel 10 des Magnetgehäuses 14 und einer Innenwandung 11 des Gehäuseteils 4 Axialkanäle 21, 22 verbleiben, die in Umfangsrichtung um gleiche Winkel gegeneinander versetzt sind. Im Längsschnitt der Figur 1 sind nur die beiden sich diametral gegenüberliegenden Axialkanäle 21, 22 zu sehen. Die Axialkanäle 21, 22 stehen einerseits über einen Ringraum 23, der im Ventilgehäuse 3 zwischen dem Boden 25 des Magnetgehäuses 14, einem aus dem Gewindestutzen 18 herausstehenden Endbereich 50 des Magnetkerns 15 mit Außengewindeabschnitt 20 und einem Gehäuseboden des topfförmigen Gehäuseteils 4 verbleibt, mit dem Zuströmstutzen 8 in Verbindung. Andererseits stehen die Axialkanäle 21, 22 über Bohrungen 24, die nahe des offenen Endes des Magnetgehäuses 14 in das Magnetgehäuse 14 eingebracht sind, mit dem Innern des Magnetgehäuses 14 in Verbindung. Durch diese Axialkanäle 21, 22 strömt der aus dem Zuströmstutzen 8 eintretende Brennstoffdampf auch um das Magnetgehäuse 14 und führt hier entstehende Wärme ab. Die Strömungsrichtung des Brennstoffdampfes in den Axialkanälen 21, 22 ist durch entsprechende Pfeile 26 in Figur 1 gekennzeichnet. Ebenso ist in Figur 1 die Strömungsrichtung des vom Zuströmstutzen 8 in den hohlen Magnetkern 15 strömenden Brennstoffdampfes durch entsprechende Pfeile 27 gekennzeichnet.

Der Rand des Magnetgehäuses 14 ist nach außen zu einem ringförmigen Auflageflansch 29 abgewinkelt, der endseitig in einen axial vorstehenden Ringsteg 30 umgebogen ist. Der Auflageflansch 29 dient zur Aufnahme eines Rückschlußjoches 31, welches das Magnetgehäuse 14 abdeckt und randseitig an dem Ringsteg 30 anliegt. Der Aufbau und die Funktion eines derartigen Rückschlußjoches 31 ist dem Fachmann aus der DE-OS 40 23 044 bekannt und wird daher im folgenden nicht näher beschrieben. Zwischen dem Auflageflansch 29 und dem Rückschlußjoch 31 wird noch eine Blattfeder 32 aus nichtmagnetischem Material, zum Beispiel aus Bronze eingespannt, die den Anker des Elektromagneten 12 trägt.

Der Elektromagnet 12 dient zum getakteten Schalten eines Sitzventils 33, das zum Beispiel einen Ventildoppelsitz 41 aufweist. Mit dem Ventildoppelsitz 41 wirkt ein Ventilglied in Form einer Ringscheibe 37 aus magnetischem Material zusammen, die zugleich den Anker des Elektromagneten 12 bildet. Die Ringscheibe 37 trägt auf ihrer dem Ventildoppelsitz 41 zugekehrten Seite einen Dichtgummi 34, der im Schließzustand des Sitzventils 33 mit dem Dichtgummi 34 durch eine Ventilschließfeder 35 auf den Ventildoppelsitz 41 aufgedrückt wird. Die freie Stirnseite des Magnetkerns 15 bildet einen Anschlag 36 für die Hubbewegung der Ringscheibe 37. Mittels des vom Innengewinde 19 und Außengewindeabschnitt 20 gebildeten Einstellgewindes läßt sich der Anschlag 36 axial verschieben und dadurch die Durchflußmenge bei maximal geöffnetem Sitzventil 33 festlegen. Die Ventilschließfeder 35 ist klein dimensioniert, da bei einem Druckgefälle zwischen Abströmstutzen 9 und Zuströmstutzen 8 eine Saugwirkung auf die Ringscheibe 37 in Richtung Ventilschließen ausgeübt wird, die Schließwirkung der Ventilfeder 35 also unterstützt. Der Abströmstutzen 9 ist zum Beispiel mittels einer Rastverbindung im kappenförmigen Gehäuseteil 5 untergebracht. Im Abströmstutzen 9 ist ein in Richtung zum Ansaugrohr hin öffnendes Rückschlagventil 48 vorgesehen, daß einen Ventilkörper 38 und eine Ventilfeder 39 aufweist.

Bei stromlosem Elektromagneten 12 ist das Sitzventil 33 geschlossen, da die Ringscheibe 37 mit ihrem Dichtgummi 34 von der Ventilschließfeder 35 auf den Ventildoppelsitz 41 aufgepreßt wird. Beim Betrieb der Brennkraftmaschine wird der Elektromagnet 12 von einer Steuerelektronik getaktet angesteuert. Die Taktfolgefrequenz wird durch den Betriebszustand der Brennkraftmaschine vorgegeben, so daß die über das Sitzventil 33 vom Zuströmstutzen 8 in den Abströmstutzen 9 übertretende Durchflußmenge an verflüchtigtem Brennstoff entsprechend dosierbar ist.

Erfindungsgemäß ist zwischen dem Gewindestutzen 18 des Elektromagnetventils 12 und dem Zuströmstutzen 8 ein Schmutzfilter 40 vorgesehen, der an dem aus dem Boden 25 des Magnetgehäuses 14 beziehungsweise des Gewindestutzens 18 herausragenden Endbereich 50 des hohlzylindrischen Magnetkerns 15 drehfest angebracht ist. Wie in der Figur 2, einem perspektivischen Teilausschnitt des Schmutzfilters 40 und des Endbereichs 50 des Magnetkerns 15, dargestellt ist, besitzt der Endbereich 50 hierzu beispielsweise die Form einer Schraubenklinge, die sich einstückig aus einem zylindrischen Teil 51 und einen schmalen, quaderförmigen, flachen Endteil 52 zusammensetzt. Der quaderförmige Endteil 52 durchdringt im eingebauten Zustand des Schmutzfilters 40 den Schmutzfilter 40, so daß der Endteil 52 näher dem Zuströmstutzen B zugewandt ist. Der Schmutzfilter 40 ist in seinem Zentrum beispielsweise durch Pressung oder Klebung möglichst dicht am quaderförmigen Endteil 52 gehalten.

Der quaderförmige Endteil 52 besitzt weiterhin eine seine beiden größten Flächen durchdringende, radiale Öffnung 43, die im eingebauten Zustand des Schmutzfilters 40 an einer dem Zuströmstutzen 8 abgewandten Seite des Schmutzfilter 40 liegt. Die Öffnung 43 geht in die in Figur 2 gestrichelt dargestellte Durchgangsöffnung 28 des hohlen Magnetkerns 15 über, so daß eine Strömungsverbindung von der Öffnung 43 zur Durchgangsöffnung 28 hergestellt wird. Der in Richtung der Pfeile 27 vom Zuströmstutzen 8 strömende Brennstoffdampf durchströmt zunächst den Schmutzfilter 40 und wird dabei von Schmutzstoffen gereinigt, um danach über die Öffnung 43 des quaderförmigen Endteils 52 in die Durchgangsöffnung 28 des Magnetkerns 15 zum Sitzventil 33 weiterzuströmen.

Der Schmutzfilter 40 hat eine scheibenförmige Form und füllt in radialer Richtung den Ringraum 23 aus, so daß dieser gegenüber dem Strömungsquerschnitt des Zuströmstutzens 8 einen erheblich größeren Strömungsquerschnitt aufweist. Ein derart großer Strömungsquerschnitt bewirkt nur einen geringen Strömungswiderstand in der Brennstoffdampfströmung und einen äußerst geringen Druckverlust am Schmutzfilter 40, wodurch eine Reduzierung der Durchflußmenge des Ventils 1 während der vorgesehenen Lebensdauer ausgeschlossen werden kann. Der Schmutzfilter 40 besitzt zum Ausfiltern der Schmutzstoffe zum Beispiel ein Gewebe, das Maschenweiten von wenigen *µ*m aufweist. Weiterhin kann der Schmutzfilter 40 an seinem Außenbereich zum Beispiel eine nachgiebige Dichtlippe 45 aufweisen, die an die Innenwandung 11 des Gehäuseteils 4 angedrückt wird. Der Schmutzfilter 40 dichtet dabei den Ringraum 23 zwischen Schmutzfilter 40 und dem Boden 25 des Magnetgehäuses 14 von einem zwischen Schmutzfilter 40 und Zuströmstutzen 8 verbleibenden Raum 54 ab, damit kein Schmutz am Schmutzfilter 40 vorbeigelangen kann. Wie in der Figur 1 dargestellt ist, gelangt der Brennstoffdampf vom Zuströmstutzen 8 in den Raum 54 und von diesem durch das Schmutzfilter 40 hindurch in den stromabwärts liegenden Teil des Ringraums 23, wonach sich der Brennstoffdampfstrom aufteilt, so daß ein Teil in Richtung der Pfeile 27 über die Öffnung 43 des quaderförmigen Endteils 52 im Magnetkern 15 und ein Teil in Richtung der Pfeile 26 in die Axialkanäle 21, 22 zum Sitzventil 33 strömt.

Der Schmutzfilter 40 ist drehfest am Endteil 52 des Magnetkerns 15 angebracht, um ohne Demontage des Ventils 1 durch Drehen des Magnetkerns 15 eine Einstellung des Hubs der Ringscheibe 37 und damit der Durchflußmenge des Ventils 1 zu ermöglichen. Dies ist mittels eines Werkzeugs möglich, das in den Zuströmstutzen 8 eingeführt wird, um angreifend an dem quaderförmigen Endteil 52 den Magnetkern 15 zu drehen. Bei der Drehung des Magnetkerns 15 dreht sich der Schmutzfilter 40 entsprechend mit, so daß dieser der axialen Verschiebung des Magnetkerns 15 im Gewindestutzen 18 folgt, wobei die Dichtlippe 45 an der Innenwandung 11 des Gehäuseteils 4 dicht anliegend bleibt.

Die Erfindung ist nicht auf das beschriebene Ausführungsbeispiel beschränkt. So kann der Endbereich 50 beziehungsweise der Endteil 52 des Magnetkerns 15 auch eine andere Form aufweisen. Beispielsweise kann der Endbereich 50 beziehungsweise der Endteil 52 auch die Form eines Drei-, Vier-, Fünf-, Sechskants, also eines Mehrkants oder dergleichen haben, um den Schmutzfilter 40 am Endteil 52 zu befestigen und, um eine Verdrehung des Magnetkerns 15 mittels des Werkzeugs zu ermöglichen.

## Patentansprüche

1. Ventil zum dosierten Einleiten von aus einem Brennstofftank einer Brennkraftmaschine verflüchtigtem Brennstoff in ein Ansaugrohr der Brennkraftmaschine, mit einem Ventilgehäuse (3), das einen Zuströmstutzen (8) zum Anschließen an einen Entlüftungsstutzen des Brennstofftanks oder an einen diesem nachgeschalteten Adsorptionsfilter für den verflüchtigten Brennstoff und einen Abströmstutzen (9) zum Anschließen an ein Ansaugrohr hat mit einem zwischen Abströmstutzen (9) und Zuströmstutzen (8) im Innern des Ventilgehäuses (3) vorgesehenen Sitzventil (33), das von einem einen hohlen Magnetkern (15) aufweisenden Elektromagneten (12) betätigbar ist, **dadurch gekennzeichnet, daß** ein Schmutzfilter (40) in einem Raum (23, 54) zwischen dem Elektromagneten (12) und dem Zuströmstutzen (8) im Ventilgehäuse (3) so untergebracht ist, daß der vom Zustromstutzen (8) zuströmende Brennstoffdampf durch den Schmutzfilter (40) strömt und erst dann zum Sitzventil (37, 41) gelangt und ein Endbereich (50) des Magnetkerns (15) den Schmutzfilter (40) dicht durchdringt, wobei der Schmutzfilter am Endbereich drehfest gehalten wird.

2. Ventil nach Anspruch 1, **dadurch gekennzeichnet, daß** der Schmutzfilter (40) an dem dem Zuströmstutzen (8) zugewandten Endbereich (50) des Magnetkerns (15) drehfest angebracht ist.

3. Ventil nach Anspruch 2, **dadurch gekennzeichnet, daß** der Endbereich (50) des hohlen Magnetkerns (15) eine radiale Öffnung (43) besitzt, die im eingebauten Zustand des Schmutzfilters (40) an einer dem Zuströmstutzen (8) abgewandten Seite des Schmutzfilters (40) liegt.

4. Ventil nach Anspruch 2, **dadurch gekennzeichnet, daß** der Endbereich (50) des Magnetkerns (15) die Form einer Schraubenklinge aufweist.

5. Ventil nach Anspruch 2, **dadurch gekennzeichnet, daß** der Endbereich (50) des Magnetkerns (15) die Form eines Drei-, Vier-, Fünf- oder Sechs- oder Mehrkants hat.

6. Ventil nach Anspruch 1, **dadurch gekennzeichnet, daß** der Schmutzfilter (40) scheibenförmig ausgebildet ist und an einer Innenwandung (11) des Ventilgehäuses (3) verschiebbar anliegt.

7. Ventil nach Anspruch 6, **dadurch gekennzeichnet, daß** der Schmutzfilter (40) aus Gewebe besteht, daß eine Maschenweite von wenigen *µ*m aufweist.

8. Ventil nach Anspruch 6, **dadurch gekennzeichnet, daß** der Schmutzfilter (40) eine Dichtlippe (45) besitzt, die an der Innenwandung (11) des Ventilgehäuses (3) anliegt.

9. Ventil nach Anspruch 2, **dadurch gekennzeichnet, daß** der Schmutzfilter (40) durch Pressung am Endbereich (50) des Magnetkerns (15) angebracht ist.

## Claims

1. Valve for the metered introduction of fuel vaporized from a fuel tank of an internal combustion engine into an intake pipe of the internal combustion engine, with a valve housing (3) which has an inflow nipple (8) for connection to a venting nipple of the fuel tank or to an adsorption filter, located downstream of the latter, for the vaporized fuel and an outflow nipple (9) for connection to an intake pipe, and with a seat valve (33) which is provided between the outflow nipple (9) and inflow nipple (8) within the valve housing (3) and which is capable of being actuated by an electromagnet (12) having a hollow magnet core (15), **characterized in that** a dirt filter (40) is accommodated in a space (23, 54) between the electromagnet (12) and the inflow nipple (8) in the valve housing (3), in such a way that the fuel vapour flowing in from the inflow nipple (8) flows through the dirt filter (40) and only then arrives at the seat valve (37, 41), and an end region (50) of the magnet core (15) passes sealingly through the dirt filter (40), the dirt filter being held fixedly in terms of rotation on the end region.

2. Valve according to Claim 1, **characterized in that** the dirt filter (40) is attached fixedly in terms of rotation to that end region (50) of the magnet core (15) which faces the inflow nipple (8).

3. Valve according to Claim 2, **characterized in that** the end region (50) of the hollow magnet core (15) possesses a radial orifice (43) which, when the dirt filter (40) is in the installed state, is located on a side of the dirt filter (40) which faces away from the inflow nipple (8).

4. Valve according to Claim 2, **characterized in that** the end region (50) of the magnet core (15) is in the form of a screwdriver blade.

5. Valve according to Claim 2, **characterized in that** the end region (50) of the magnet core (15) is in the form of a triangle, square, pentagon, hexagon or polygon.

6. Valve according to Claim 1, **characterized in that** the dirt filter (40) has a disc-shaped design and bears displaceably against an inner wall (11) of the valve housing (3).

7. Valve according to Claim 6, **characterized in that** the dirt filter (40) consists of fabric which has a mesh width of a few *µ*m.

8. Valve according to Claim 6, **characterized in that** the dirt filter (40) possesses a sealing lip (45) which bears against the inner wall (11) of the valve housing (3).

9. Valve according to Claim 2, **characterized in that** the dirt filter (40) is attached to the end region (50) of the magnet core (15) by pressing.

## Revendications

1. Soupape pour introduire de manière dosée le carburant volatilisé provenant du réservoir d'un moteur à combustion interne, dans la tubulure d'aspiration du moteur, comprenant :
un boîtier de soupape (3) muni d'un ajutage d'alimentation (8) destiné à être raccordé à l'ajutage de ventilation du réservoir de carburant ou à être relié à un filtre d'adsorption, en aval du réservoir, pour recueillir le carburant volatil, ainsi que d'un ajutage de sortie (9) destiné à être branché sur une tubulure d'aspiration,
une soupape à siège (33) prévue entre l'ajutage de sortie (9) et l'ajutage d'entrée (8) à l'intérieur du corps de soupape (3), cette soupape à siège (33) étant actionnée par un électro-aimant (12) ayant un noyau magnétique creux (15),
**caractérisée en ce qu'**
un filtre à saletés (40) est prévu dans l'espace (23, 54) entre l'électro-aimant (12) et l'ajutage d'alimentation (8) dans le corps de soupape (3), pour que les vapeurs de carburant venant de l'ajutage d'alimentation (8) traversent le filtre à saletés (40) et n'arrivent qu'ensuite sur la soupape à siège (37, 41), et
une zone d'extrémité (50) du noyau magnétique (15) traverse de manière étanche le filtre à saletés (40) et ce filtre est maintenu solidairement en rotation sur la zone d'extrémité.

2. Soupape selon la revendication 1,
**caractérisée en ce que**
le filtre à saletés (40) est monté solidairement en rotation sur la zone d'extrémité (50) du noyau magnétique (15) tourné vers l'ajutage d'alimentation (8).

3. Soupape selon la revendication 2,
**caractérisée en ce que**
la zone d'extrémité (50) du noyau magnétique creux (15) possède une ouverture radiale (43) située du côté du filtre à saletés (40) non tourné vers l'ajutage d'alimentation (8) lorsque le filtre (40) est mis en place.

4. Soupape selon la revendication 2,
**caractérisée en ce que**
la zone d'extrémité (50) du noyau magnétique (15) présente la forme d'une lame de tournevis.

5. Soupape selon la revendication 2,
**caractérisée en ce que**
la zone d'extrémité (50) du noyau magnétique (15) a la forme d'un organe à trois, quatre, cinq, six arêtes ou plus.

6. Soupape selon la revendication 1,
**caractérisée en ce que**
le filtre à saletés (40) a la forme d'un disque et s'applique de manière coulissante contre la paroi intérieure (11) du boîtier (3) de la soupape.

7. Soupape selon la revendication 6,
**caractérisée en ce que**
le filtre à saletés (40) est en un tissu ayant une maille de quelques µm.

8. Soupape selon la revendication 6,
**caractérisée en ce que**
le filtre à saletés (40) possède une lèvre d'étanchéité (45) s'appliquant contre la paroi intérieure (11) du corps de soupape (3).

9. Soupape selon la revendication 2,
**caractérisée en ce que**
le filtre à saletés (40) est installé par pressage contre la zone d'extrémité (50) du noyau magnétique (15).
